# EUROPEAN PATENT SPECIFICATION

(11) **EP 0 891 920 B1**
(45) Date of publication and mention of the grant of the patent: **04.05.2005**
(21) Application number: 98830411.9
(22) Date of filing: 07.07.1998
(51) Int. Cl.: B62J 17/00

(54) **Two-wheeled vehicle with adjustable shell, accessible through side-doors**
Zweiradfahrzeug, ausgerüstet mit einer verstellbaren Schale,zugänglich durch Seitentüren
Véhicule à deux roues équipé avec une enveloppe ajustable,accessible par les portes latérales

(30) Priority: 16.07.1997 IT RM970142 U
(43) Date of publication of application: 20.01.1999
(73) Proprietor: Pozio, Nicola, 00161 Rome (IT)
(72) Inventor: Pozio, Nicola, 00161 Rome (IT)
(74) Representative: Iannone, Carlo Luigi

(56) References cited:
- WO-A-85/00568
- DE-C- 906 413
- DE-U- 9 410 306
- US-A- 4 311 335

## Description

The invention herein described is fitted to a two-wheeled vehicle commonly known as a "scooter", characterised by being equipped by two small diameter wheels, plastic body work and a tube chassis designed so as to allow the driver to adopt a position similar to that adopted when driving a car. Hence more comfortable that an ordinary motorcycle.

Nonetheless unlike ordinary scooters this two-wheeled vehicle is equipped with wrap-around structure which forms a true shell for the driver and possible passenger. The shell is fully adjustable to provide the user with variable degrees of protection according to his requirements.

In fact, depending on weather conditions (hot/cold, sun/rain etc.) the user may increase or reduce the opening of the shell that protects him in the way described further on.

Accessories that as well as improving the aerodynamics of the two-wheeled vehicle also function as windscreen and partial canopy providing the driver with partial protection form the elements have been around for quite some time. DE-B-906413 describes a vehicle according to the precharacterising portion of claim 1.

The present invention intends to overcome the disadvantages of an ordinary scooter providing the driver and possible passenger of the motorcycle with a maximum protection possible from bad weather and pollution.

The structure forms a true shell around the seats which are accessible through side doors on both sides. Both side doors and the canopy can be disassembled according to the driver requirements who can in this way tailor the degree of cover provided by the shell on the basis of the weather conditions.

In particular, whilst the doors are removable and maybe laid away, the canopy can either be removed or folded out of sight into luggage compartment (like a convertible) without having to be disassembled, thus being always ready should the driver wish to re-cover the scooter.

Another notable feature of the invention is that both side doors large openings on the lower section which enable the driver to extend his legs to the road surface, when the vehicle comes to a stop as on an ordinary scooter.

The side doors open with upward rotational movement along the length of the scooter, so as not use any further lateral space once the vehicle is parked.

The invention is illustrated in the attached figures:
Fig. 1: shows the vehicle with the side-doors and the canopy fully closed
Fig. 2: shows the vehicle without the side doors and with the canopy fully closed
Fig. 3: shows the vehicle without the side doors and with the canopy open
Fig. 4: shows the vehicle with the side doors and with the canopy open
Fig. 5: shows the vehicle with one side door open and the other side door and the canopy closed
Fig. 6: shows the vehicle with both the side doors and with the canopy closed
Fig. 7-8-9-10-11: shows the sequence of opening the canopy and folding it away in the luggage compartment
Fig. 12: shows another detail of the folded canopy being stored in the luggage compartment
Fig. 13: shows the vehicle with one side door open

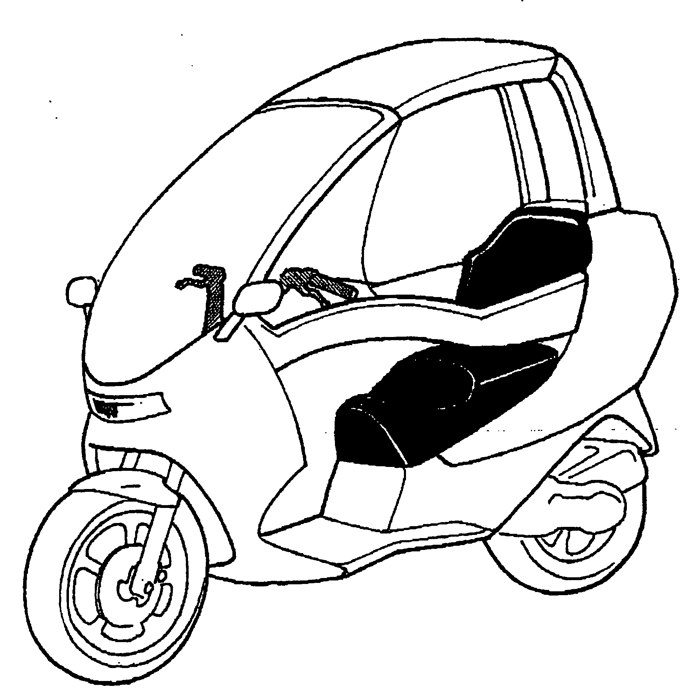

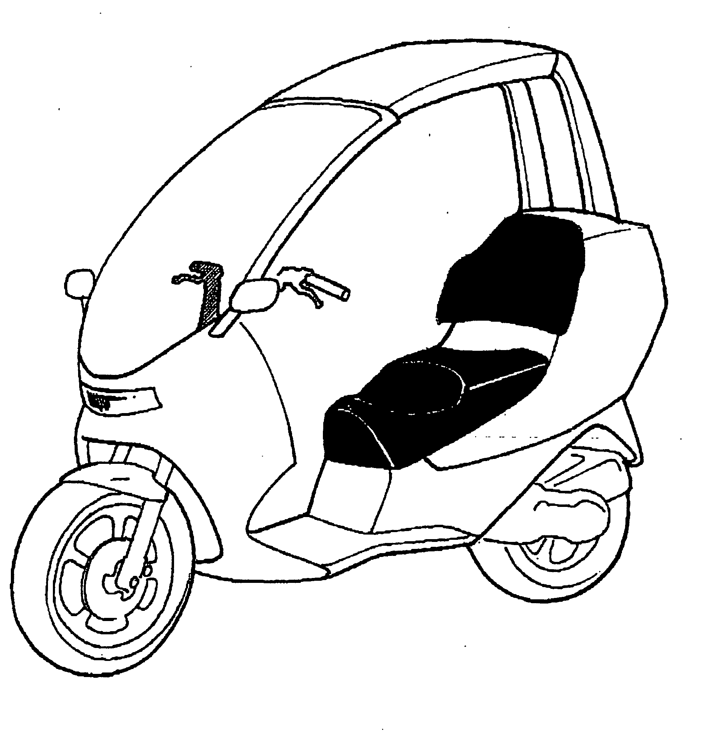

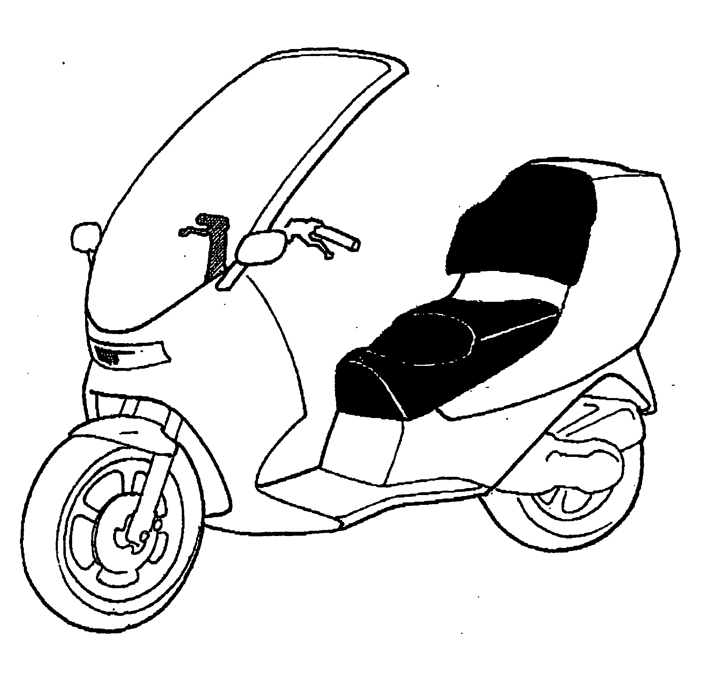

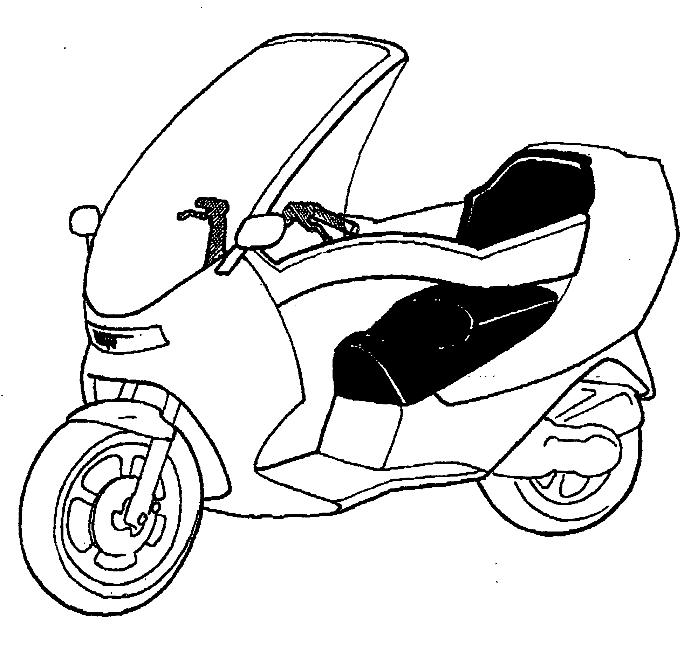

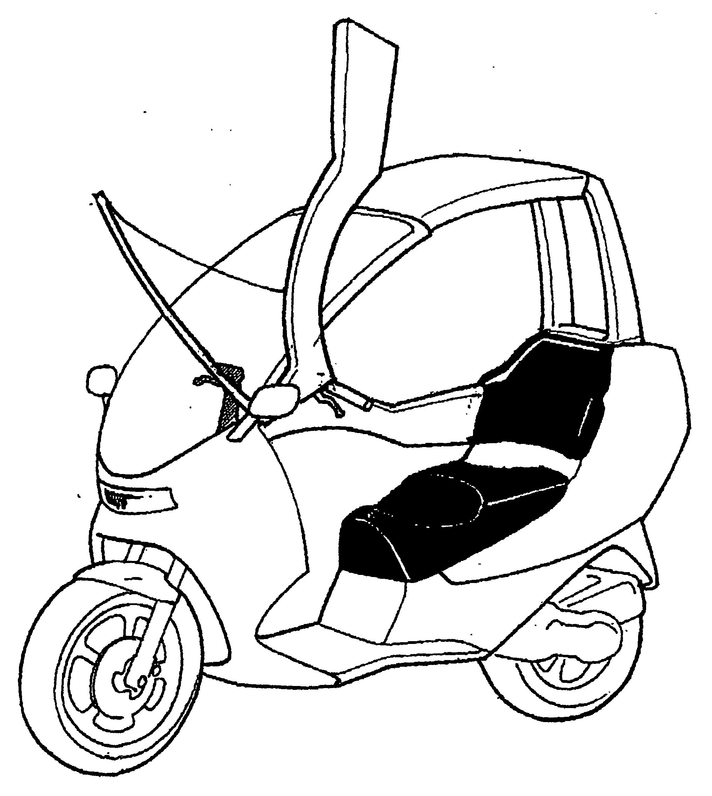

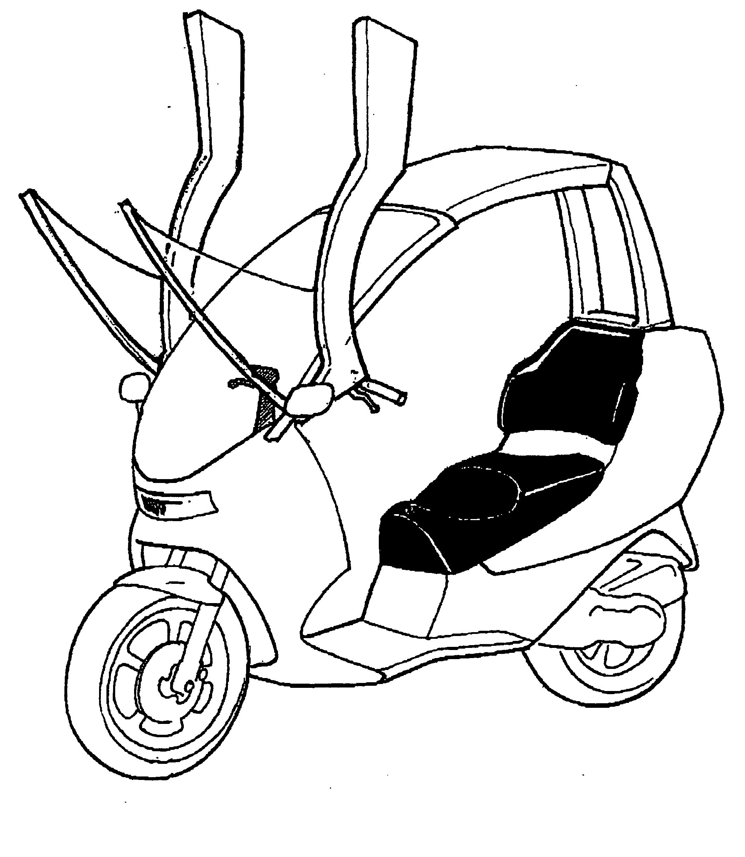

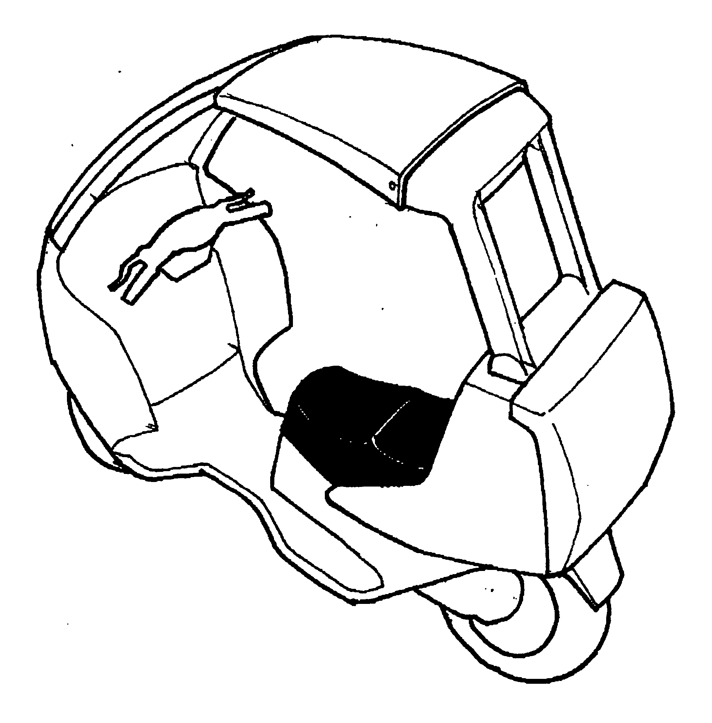

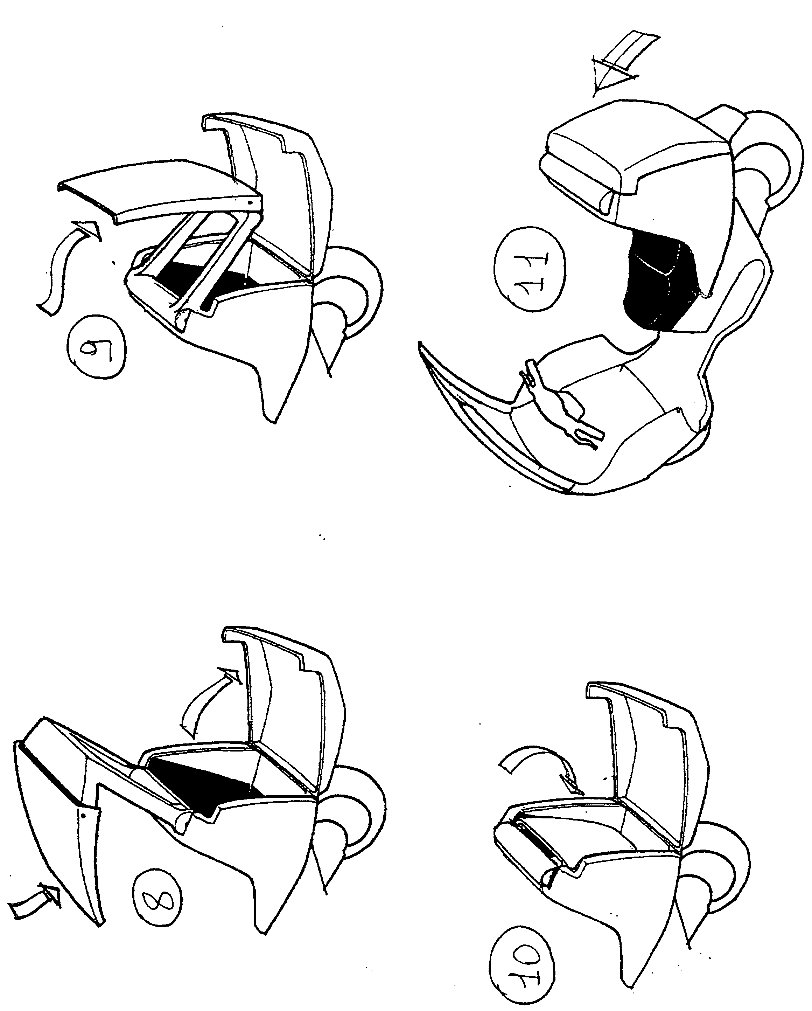

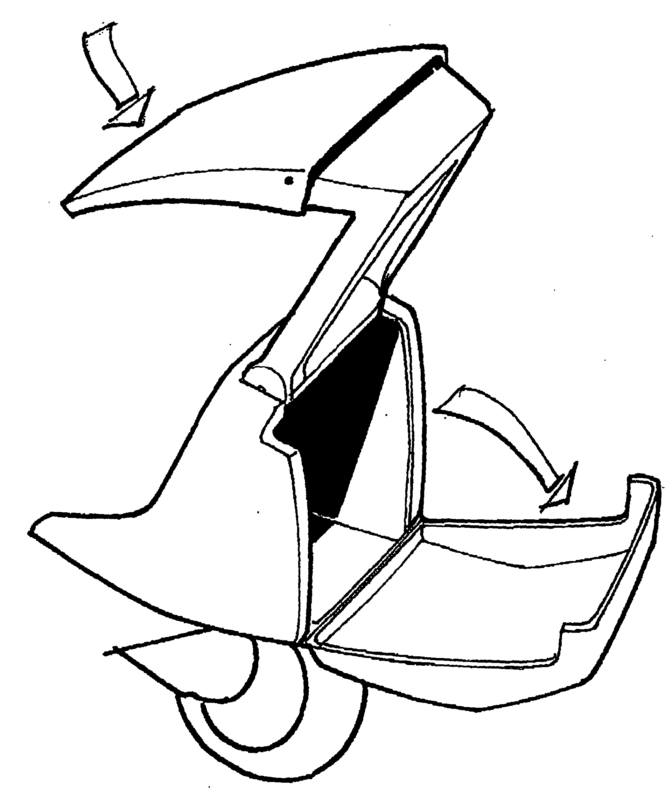

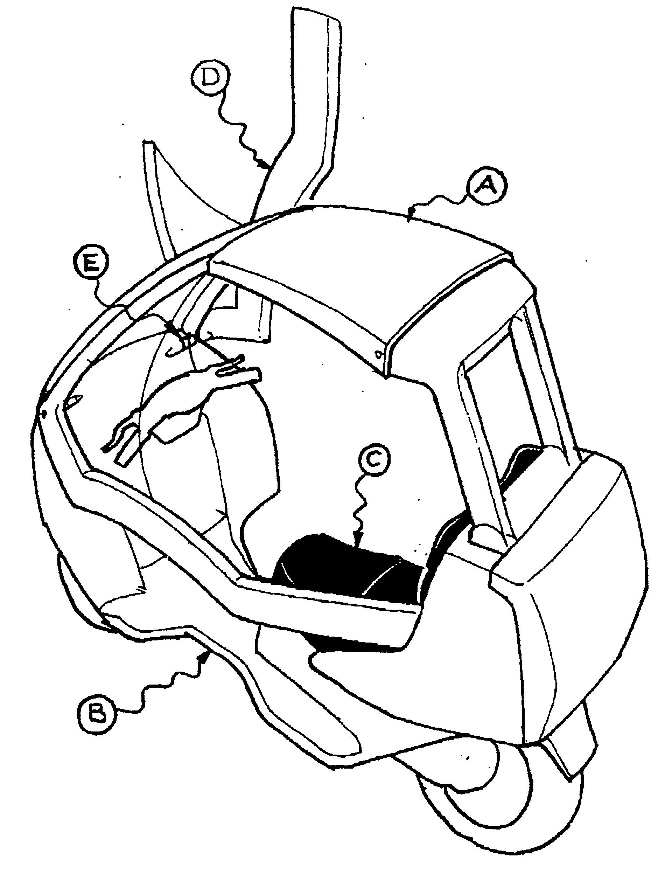

In Fig. 13, A) shows the canopy, B) shows the wide lateral opening that enable the driver to extend his legs to the road surface as on an ordinary scooter, C) shows the two seats with adjustable backrest to accommodate passengers of all size, D) shows the side doors that rotate on hinges to be opened with upward rotational movement enabling entry to the shell (see Fig. 5).

The main functions of the side doors is to support the side windows that protect the occupants of the vehicle and to protect from any lateral fall.

As is shown in the figures the wide opening that enable the driver to extend his legs to the road surface start from the floorboard and extend upward to above the seats; this provide the driver with the mobility enjoyed on a traditional scooter.

What said and illustrated underlines the convenience of the shelled two-wheeled vehicle, object of the present invention, both the driver and possible passenger are comfortably seated with a backrest similar to that of the car, that with headrest extends almost to the canopy; the shell fully protects the driver whilst still allowing the driver to move freely as on an ordinary scooter.

## Claims

1. Two-wheeled vehicle similar to a "scooter", having a structure that forms a shell around the occupants, accessible though side doors, said vehicle being **characterised in that** the shell is fully adjustable, **in that** the side doors and a foldable canopy are provided removable on the vehicle, and **in that** said two side doors have wide openings enabling the driver to extend his legs to the road surface when the vehicle comes to a stop.

2. Two-wheeled vehicle similar to a "scooter" according to claim 1 **characterised by** the fact that the side-doors are opened with upward rotational movement along the length of the vehicle.

3. Two-wheeled vehicle similar to a "scooter" according to claim 1 or 2 **characterised by** the fact that the canopy may without being removed, be folded into the luggage compartment similar to a convertible car.

4. Two-wheeled vehicle similar to a "scooter" according to one of the preceding claims **characterised by** the fact that it is convertible.

## Patentansprüche

1. Zweiradfahrzeug, ähnlich einem Motorroller, der eine Struktur hat, die eine Muschel um die Insassen bildet, zugänglich durch Seitentüren, wobei das Fahrzeug **dadurch gekennzeichnet ist, dass** die Muschel vollständig verstellbar ist und dass die Seitentüren und ein faltbares Kabinendach abnehmbar an dem Fahrzeug vorgesehen sind und dass die beiden Seitentüren große Öffnungen haben, die es dem Fahrer ermöglichen, seine Beine auf die Fahrbahnoberfläche auszustrecken, wenn das Fahrzeug zum Stehen kommt.

2. Zweiradfahrzeug, ähnlich einem Motorroller, nach Anspruch 1, **dadurch gekennzeichnet, dass** die Seitentüren unter einer aufwärts drehenden Bewegung entlang der Längsachse des Fahrzeugs öffnen.

3. Zweiradfahrzeug, ähnlich einem Motorroller, nach Anspruch 1 oder 2, **dadurch gekennzeichnet, dass** das Kabinendach in einen Kofferraum faltbar ist, ohne abgenommen werden zu müssen, ähnlich zu einem Auto mit Klappverdeck.

4. Zweiradfahrzeug, ähnlich einem Motorroller, nach einem der vorgenannten Ansprüche, **dadurch gekennzeichnet, dass** es ein Klappverdeck ist.

## Revendications

1. Véhicule à deux roues similaire à un « scooter », comportant une structure qui forme une coque autour des occupants, accessible par l'intermédiaire des portes latérales, ledit véhicule étant **caractérisé en ce que** la coque est complètement réglable, **en ce que** les portes latérales et un toit pliant sont prévus de manière amovible sur le véhicule, et **en ce que** lesdites deux portes latérales ont des ouvertures larges permettant au conducteur d'étendre ses jambes sur la surface de la route quand le véhicule s'arrête.

2. Véhicule à deux roues similaire à un « scooter » selon la revendication 1, **caractérisé en ce que** les portes latérales s'ouvrent par un déplacement rotatif vers le haut sur toute la longueur du véhicule.

3. Véhicule à deux roues similaire à un « scooter » selon l'une quelconque des revendications 1 ou 2, **caractérisé en ce que** le toit peut, sans être enlevé, être replié dans le porte-bagages, comme dans un convertible.

4. Véhicule à deux roues similaire à un « scooter » selon l'une quelconque des revendications précédentes, **caractérisé en ce qu'**il est convertible.
